# EUROPEAN PATENT APPLICATION

(11) **EP 4 679 280 A1**
(43) Date of publication of application: **14.01.2026**
(21) Application number: 24766802.3
(22) Date of filing: 14.02.2024
(51) Int. Cl.: G06F 15/173

(54) **CALCULATION DEVICE AND DATA TRANSFER METHOD**

(30) Priority: 07.03.2023 JP 2023034879
(71) Applicant: DENSO CORPORATION, Kariya-city, Aichi 448-8661 (JP)
(72) Inventor: KOSAKI Masanori, Kariya- city, Aichi 4488661 (JP)
(74) Representative: Winter, Brandl - Partnerschaft mbB
(86) International application number: PCT/JP2024/005102
(87) International publication number: WO 2024/185430

(57) **Abstract**

An accelerator (10) includes multiple PEs (12). The multiple PEs (12) are represented by a coordinate system, which includes two dimensions of X direction and Y direction and two or more different dimensions indicating different directions. Each PE (12) is capable of performing data input or data output with another PE (12) adjacent in the X direction or the Y direction, and is also capable of performing data input or data output with another PE (12) adjacent in different dimension.

## Description

### CROSS REFERENCE TO RELATED APPLICATION

This application is based on Japanese Patent Application No. 2023-034879 filed on March 7, 2023, the disclosure of which is incorporated herein by reference.

### TECHNICAL FIELD

The present disclosure relates to a calculation device and a data moving method.

### BACKGROUND ART

A calculation device (accelerator), which includes multiple processing elements (PEs) functioning as processors and arranged in a two-dimensional mesh structure, has been developed (Patent Literature 1).

In such a calculation device, input and output of data between PEs is performed, for example, by broadcast, which allows input and output of data between an external memory and each PE, or by input and output of data between two adjacent PEs.

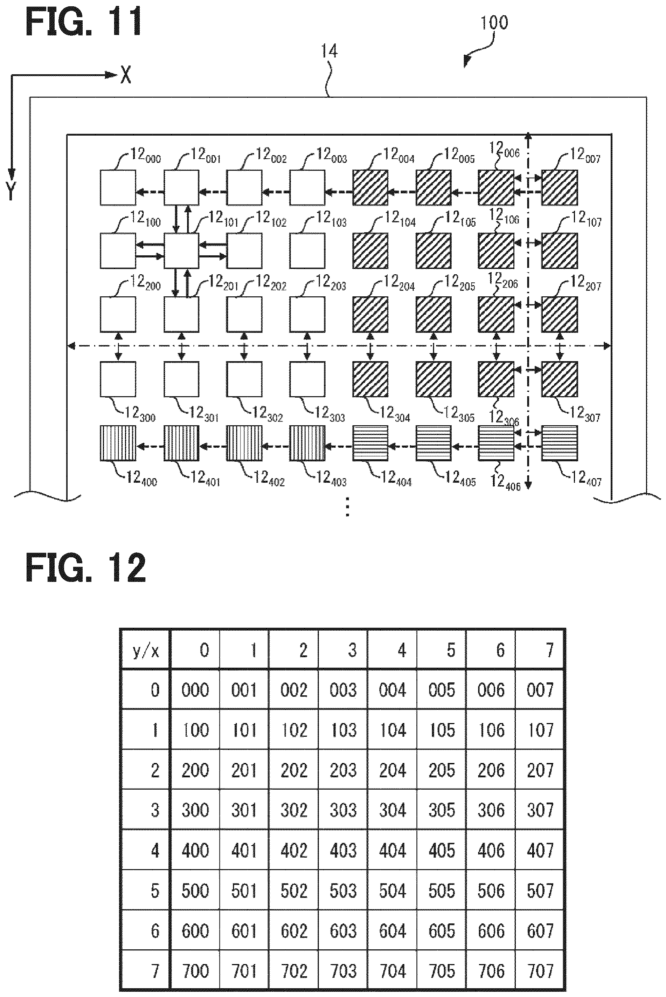

FIG. 11 is a schematic diagram of a conventional accelerator 100 including multiple PEs 12 arranged in a mesh structure on a XY plane. In an example shown in FIG. 11, although some of the PEs 12 in the Y direction are omitted, the PEs 12 are arranged two-dimensionally such that eight PEs are arranged in each of the X and Y directions (8 rows and 8 columns), totaling 64 PEs 12. FIG. 12 is a diagram showing the PEs 12 shown in FIG. 11 in terms of XY coordinates. The three-digit numbers 000 to 707 shown in FIG. 12 correspond to the subscripts of PE 12 shown in FIG. 11.

In FIG. 11, the dash-dot arrows indicate input and output of data between an external memory 14 and the PE 12 by broadcast. In FIG. 11, the solid arrows indicate input and output of data between adjacent PEs 12. In the actual accelerator 100, wirings arranged similar to the arrows are provided between the external memory 14 and the PEs 12, and between the adjacent PEs 12, to enable input and output of data.

In FIG. 11, only some of the arrows indicating input and output of data are shown, and input and output of data is similarly performed (i) between the external memory 14 and the PE 12, and (ii) between adjacent PEs 12, although the arrows indicating input and output of data are not shown for the remaining PEs. The rectangles representing the PEs 12 are shown with different types of hatching or without hatching. But the PEs 12 all have the same function.

### PRIOR ART LITERATURE

### PATENT LITERATURE

Patent Literature 1: US 2020/0225884 A

### SUMMARY

In a conventional accelerator 100 having multiple PEs 12 arranged in a mesh structure as shown in FIG. 11, data can only be moved by one PE 12 for each time. For this reason, it takes time to move data between the PEs 12 in order to perform aggregation processing, such as Sum processing and Max processing. For example, in FIG. 11, when moving data from the rightmost PE 12₀₀₇ to the leftmost PE 12₀₀₀ or when moving data from the rightmost PE 12₄₀₇ to the leftmost PE 12₄₀₀, seven times of moving operation are required as shown by the dashed arrows. When the times of data moving operation is increased to a large number, it may suppress improvement in calculation speed and suppress decrease in consumption.

An object of the present disclosure is to provide a calculation device and a data moving method, each of which can increase a speed of moving data between processors.

In order to achieve the above-described object, the present disclosure provides the following technical means. The symbols in parentheses described in this section and in the claims are merely examples showing the correspondence with specific means described in the embodiment set forth below as one aspect of the present disclosure, and do not limit the technical scope of the present disclosure.

According to an aspect of the present disclosure, a calculation device includes multiple processors. The multiple processors are represented by a coordinate system, which includes two dimensions indicating X direction and Y direction and two or more different dimensions indicating different directions. Each processor is configured to perform data input or data output with the processor adjacent in the X direction or the Y direction, and is further configured to perform data input or data output with the processor adjacent in the different dimension.

In the above configuration, one processor can perform data input or data output with another processor that is not adjacent in the X or Y direction. This configuration can reduce the number of processors required to move data, thereby enabling data movement between processors with a higher speed compared with a conventional method.

In the above-described calculation device, four or more of the processors, each of which has the different dimension with one another, are virtually grouped as one group. Each processor included in the group is configured to perform data input or data output with (i) at least two processors included in the same group and (ii) two of the multiple processors, which are included in a different group and arranged adjacent in the X direction and Y direction.

In the above-described calculation device, each processor is configured to perform data input or data output with another processor arranged in a diagonal direction with respect to at least one of the X direction, the Y direction, or the different direction.

In the above-described calculation device, further includes multiple memories, which store data to be calculated by the multiple processors and transfer the data to the multiple processors. The external memories store the data using a coordinate system, which includes two dimensions indicating X direction and Y direction and two or more different dimensions indicating different directions. Each external memory is configured to perform data input or data output with one of the processors having the same coordinate.

In the above-described calculation device, the multiple processors are arranged such that a total length of wiring for performing data input or data output among the multiple processors has a minimum length.

In the above-described calculation device, each of the multiple processors receives, from an external memory, processing data, which is to be calculated in a current calculation, together with overlapping data, which is adjacent to the processing data and is to be calculated in a next calculation. Each of the multiple processors is configured to perform input or output of the processing data and the overlapping data with the processor adjacent in the X direction or the Y direction. Each of the multiple processors is configured to perform input or output of the processing data and the overlapping data with the processor adjacent in the different dimension.

In the above-described calculation device, the multiple processors are capable of performing different processes for the two or more different dimensions, respectively. The multiple processors are capable of performing processes at different timings.

According to another aspect of the present disclosure, a method is provided for moving data among multiple processors included in a calculation device. The method includes: representing the multiple processors with a coordinate system, which includes two dimensions indicating X direction and Y direction and two or more different dimensions indicating different directions; performing, by each of the multiple processors, data input or data output with the processor adjacent in the X direction or the Y direction; performing, by each of the multiple processors, data input or data output with the processor adjacent in the different dimension; and calculating, by each of the multiple processors, input data and outputting a calculation result.

### EFFECTS OF INVENTION

The present disclosure can perform data movement between processors at a higher speed.

### BRIEF DESCRIPTION OF DRAWINGS

The above and other objects, features and advantages of the present disclosure will become more apparent from the following detailed description made with reference to the accompanying drawings. In the drawings:
FIG. 1 is a schematic diagram showing an arrangement of PEs included in an accelerator according to a first embodiment;
FIG. 2 is a schematic diagram showing coordinates of PEs included in the accelerator according to the first embodiment;
FIG. 3 is a schematic diagram showing coordinates of PEs included in an accelerator according to a second embodiment;
FIG. 4 is a schematic diagram showing an arrangement of PEs included in the accelerator according to the second embodiment;
FIG. 5 is a schematic diagram showing coordinates of PEs included in an accelerator according to a third embodiment;
FIG. 6 is a schematic diagram of data to be calculated in a fourth embodiment;
FIG. 7 is a diagram showing coordinates of data included in a divided area allocated to a conventional PE;
FIG. 8 is a diagram showing coordinates of data included in a divided area allocated to a PE according to a fourth embodiment;
FIG. 9 is a diagram showing a calculation formula showing data reading for each PE in the fourth embodiment;
FIG. 10 is a diagram showing a calculation formula showing data reading for each PE in a modified example of the fourth embodiment;
FIG. 11 is a schematic diagram showing an arrangement of PEs included in a conventional accelerator; and
FIG. 12 is a schematic diagram showing coordinates of PEs included in the conventional accelerator.

### DESCRIPTION OF EMBODIMENTS

The following will describe embodiments of the present disclosure with reference to the drawings. The embodiments described below show an example of the present disclosure, and the present disclosure is not limited to the specific configuration described below. In an implementation of the present disclosure, a specific configuration of an embodiment may be adopted as appropriate.

### (First Embodiment)

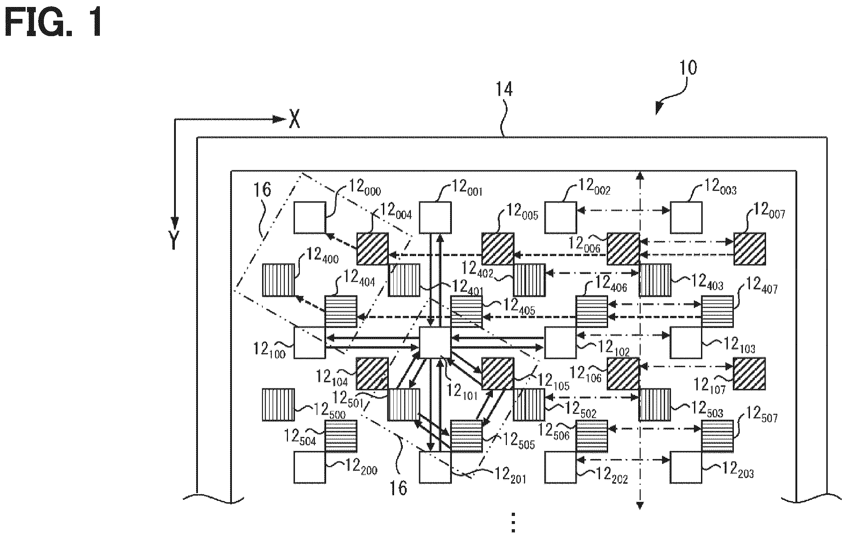

FIG. 1 is a schematic diagram showing an accelerator 10, which corresponds to a calculation device according to the present embodiment. The accelerator 10 of the present embodiment includes multiple PEs 12, which correspond to processors. For example, the accelerator 10 performs calculations using a neural network. The target data to be calculated by the PEs 12 is stored in an external memory 14, and transferred from the external memory 14 to the PE 12. The external memory 14 also stores parameters, such as weighting coefficients to be used in the calculation performed by the neural network. The external memory 14 transfers these parameters to the PEs 12 as well.

The accelerator 10 shown in FIG. 1 includes, as an example, 64 PEs 12. Some of the PEs 12 are not shown. Specifically, the accelerator 10 includes PEs 12₀₀₀ to 12₀₀₇, PEs 12₁₀₀ to 12₁₀₇, PEs 12₂₀₀ to 12₂₀₇, PEs 12₃₀₀ to 12₃₀₇, PEs 12₄₀₀ to 12₄₀₇, PEs 12₅₀₀ to 12₅₀₇, PEs 12₆₀₀ to 12₆₀₇, and PEs 12₇₀₀ to 12₇₀₇.

In FIG. 1, the dashed-dot arrows indicate input and output of data between the external memory 14 and the PEs 12 by broadcast, and the solid arrows indicate input and output of data between adjacent PEs 12.

The hatched rectangles and reference symbols indicating the PEs 12 in FIG. 1 correspond to the PEs 12 in FIG. 11. That is, between PEs 12 that have same hatching and are adjacent in the X or Y directions, input and output of data is enabled as indicated by the solid arrows. The PEs 12 capable of inputting and outputting data are the PEs 12 that are interconnected by wirings.

In the present embodiment, each PE 12 is capable of inputting and outputting data between adjacent PE 12 in the X direction or Y direction, and is also capable of inputting and outputting data between two or more other PEs 12 that are not adjacent in the X direction and Y direction. In the example of FIG. 1, the directions of two or more other PEs 12 relative to the PE 12 are referred to as Z direction and W direction. The Z direction and W direction are not perpendicular to the X direction and Y direction on the XY plane, and intersect with the X direction and Y direction.

For example, PE 12₁₀₁ is adjacent to PE 12₁₀₂ and PE 12₁₀₀ in the X direction, and PE 12₁₀₁ is adjacent to PE 12₀₀₁ and PE 12₂₀₁ in the Y direction.

The PE 12₁₀₅ and PE 12₅₀₁ are other PEs 12 relative to the PE 12₁₀₁. In the example of FIG. 1, data can be input and output between PE 12₁₀₁ and PE 12₁₀₅, and between PE 12₁₀₁ and PE 12₅₀₁. The direction of the PE 12₁₀₅ relative to the PE 12₁₀₁ is referred to as the Z direction, and the direction of the PE 12₅₀₁ relative to the PE 12₁₀₁ is referred to as the W direction.

In addition to the PE 12₁₀₄, PE 12₁₀₆, PE 12₀₀₅, and PE 12₂₀₅ adjacent in the X and Y directions, the PE 12₁₀₅ is also able to input and output data to and from other PEs 12, such as PE 12₁₀₁ in the Z direction and PE 12₅₀₅ in the W direction.

Similarly, in addition to the PE 12₅₀₀, PE 12₅₀₂, PE 12₄₀₁, and PE 12₆₀₁ adjacent in the X and Y directions, the PE 12₅₀₁ is also able to input and output data to and from other PEs, such as 12₅₀₅ in the Z direction and the PE 12₁₀₁ in the W direction.

The PE 12₅₀₅ is able to input and output data to and from other PEs 12, such as the PE 12₅₀₁ in the Z direction and the PE 12₁₀₅ in the W direction, in addition to the PE 12₅₀₄, PE 12₅₀₆, PE 12₄₀₅, and PE 12₆₀₅ adjacent in the X and Y directions.

In the present embodiment, the PE 12 in the X direction is referred to as a first-dimensional element, the PE 12 in the Y direction is referred to as a second-dimensional element, the PE 12 in the Z direction is referred to as a third-dimensional element, and the PE 12 in the W direction is referred to as a fourth-dimensional element. For example, when the PE 12₁₀₁ is taken as the reference, PE 12₁₀₀ and PE 12₁₀₂ are the PEs 12 in the first dimension (X direction), PE 12₀₀₁ and PE 12₂₀₁ are the PEs 12 in the second dimension (Y direction), PE 12₁₀₅ is the PE 12 in the third dimension (Z direction), and PE 12₅₀₁ is the PE 12 in the fourth dimension (W direction).

In the example of FIG. 1, four PEs 12 are arranged in each of the X and Y directions, and two PEs 12 are arranged in each of the Z and W directions. Therefore, in the following description, such an arrangement relationship will be expressed in terms of the number of elements as 4D (X, Y, Z, W) = (4, 4, 2, 2). Thus, the arrangement of PEs 12 in FIG. 1 is described in four dimensions (4D), that is, the X, Y, Z, and W directions.

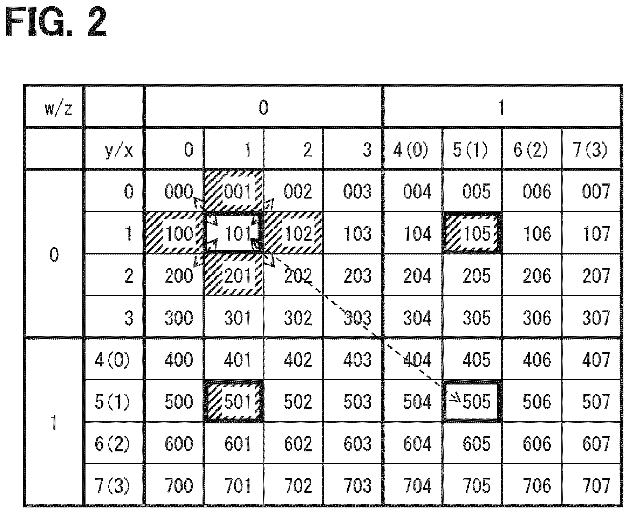

As shown in FIG. 2, the PE 12 is expressed by xyzw coordinates. The three-digit numbers shown in FIG. 2 correspond to the three-digit subscript of the PE 12 in FIG. 1. In FIG. 2, x indicates the coordinate in the X direction, y indicates the coordinate in the Y direction, z indicates the coordinate in the Z direction, and w indicates the coordinate in the W direction. In the present embodiment, the x coordinate indicating the position in the X direction is represented by 0 to 7, the y coordinate indicating the position in the Y direction is represented by 0 to 7, the z coordinate indicating the position in the Z direction is represented by 0 and 1, and the w coordinate indicating the position in the W direction is represented by 0 and 1.

In this way, the PEs 12 are represented in a coordinate system that includes two dimensions of X direction and Y direction, as well as two or more other dimensions indicating other directions, such as Z direction and W direction. Each PE 12 is capable of inputting and outputting data with the adjacent PEs 12 in the X direction and Y direction, and is also capable of inputting and outputting data with the adjacent PEs 12 in other dimensions, such as Z direction and W direction.

In the present embodiment, each PE 12 can be considered as four or more PEs 12, which are not adjacent to each other in the X direction and the Y direction and virtually constituting one group 16. In the present embodiment, four PEs 12 constitute a group 16. For example, one group 16 is configured by PE 12₀₀₀, PE 12₀₀₄, PE 12₄₀₀, and PE 12₄₀₄, which are surrounded by a two-dot chain line in FIG. 1. Another group 16 is configured by PE 12₁₀₁, PE 12₁₀₅, PE 12₅₀₁, and PE 12₅₀₅, which are surrounded by a two-dot chain line.

Each PE 12 in the group 16 is capable of inputting and outputting data with at least two PEs 12, and is also capable of inputting and outputting data with other PEs 12, which are included in another group 16 and adjacent in the X direction and Y direction.

The input and output of data based on group 16 will be explained using group 16, which includes PE 12₁₀₁, PE 12₁₀₅, PE 12₅₀₁, and PE 12₅₀₅, as an example.

The PE 12₁₀₁ inputs and outputs data to and from PE 12₁₀₅ and PE 12₅₀₁ included in the group 16, and also inputs and outputs data to and from adjacent PE 12₁₀₀, PE 12₁₀₂, PE 12₀₀₁, and PE 12₂₀₁ included in other groups 16.

The PE 12₁₀₅ inputs and outputs data to and from PE 12₁₀₁ and PE 12₅₀₅, which are included in the same group 16. The PE 12₁₀₅ also inputs and outputs data to and from adjacent PEs, that is, PE 12₁₀₄, PE 12₁₀₆, PE 12₀₀₅, and PE 12₂₀₅, which are included in other groups 16.

The PE 12₅₀₁ inputs and outputs data to and from PE 12₁₀₁ and PE 12₅₀₅, which are included in the same group 16. The PE 12₅₀₁ also inputs and outputs data to and from adjacent PEs, that is, PE 12₅₀₀, PE 12₅₀₂, PE 12₄₀₁, and PE 12₆₀₁, which are included in other groups 16.

The PE 12₅₀₅ inputs and outputs data to and from PE 12₁₀₅ and PE 12₅₀₁, which are included in the same group 16. The PE 12₅₀₅ also inputs and outputs data to and from adjacent PEs, that is, PE 12₅₀₄, PE 12₅₀₆, PE 12₄₀₅, and PE 12₆₀₅, which are included in other groups 16.

The group 16 will be described with reference to the coordinates shown in FIG. 2. As described above, the group 16 is configured by four PEs 12. The group 16 includes PEs 12, which have the same x and y coordinates corresponding to each combination of zw coordinates, that is, for each of the coordinates (z, w) = (0, 0), (0, 1), (1, 0), and (1, 1). That is, when the x coordinates = 4, 5, 6, 7 corresponding to z coordinate = 1 are changed to 0, 1, 2, 3 and the y coordinates = 4, 5, 6, 7 corresponding to w coordinate = 1 are changed to 0, 1, 2, 3, the PEs 12 having the same x and y coordinates will configure one group 16.

For example, the coordinates of group 16 consisting of PE 12₁₀₁, PE 12₁₀₅, PE 12₅₀₁, and PE 12₅₀₅ shown in FIG. 1 are expressed as (1, 1, 0, 0), (5(1), 1, 1, 0), (1, 5(1), 0, 1), and (5(1), 5(1), 1, 1).

Each PE 12 is capable of inputting and outputting data with adjacent PEs 12 in the same dimension. For example, PE 12₁₀₁ is capable of inputting and outputting data with PE 12₁₀₀, PE 12₁₀₂, PE 12₀₀₁, and PE 12₂₀₁. Note that the PEs 12 in the same dimension are not included in the same group 16, as described above.

Each PE 12 is capable of inputting and outputting data with the PE 12, which is in another adjacent dimension and have the same x and y coordinates. That is, PE 12₁₀₁ can input and output data to and from the PE 12₁₀₅ and PE 12₅₀₁. The PE 12₁₀₁ has coordinates of (1, 1, 0, 0) and the PE 12₅₀₅ has coordinates of (5(1), 5(1), 1, 1), and the PE 12₁₀₁ and PE 12₅₀₅ are not adjacent to each other in the X and Y directions and the Z and W directions. For this reason, input and output of data between PE 12₁₀₁ and PE 12₅₀₅ is not possible. In FIG. 2, the PEs 12 that are capable of inputting and outputting data to and from the PE 12₁₀₁ are indicated by hatching.

In the present embodiment, it is possible to input and output data between PEs 12 whose coordinates are adjacent in the X and Y directions or the Z and W directions. Further, the input and output of data may be configured to be enabled between PEs 12 that are located diagonally relative to at least one of the X direction, Y direction, and other directions (Z direction, W direction).

For example, when PE 12₁₀₁ is set as a reference PE, PE 12₀₀₀, PE 12₀₀₂, PE 12₂₀₀, and PE 12₂₀₂ indicated by arrows in FIG. 2 are PEs 12 in diagonal directions relative to the X and Y directions. The PE 12₁₀₁ may be configured to perform data input and data output with the PE 12₀₀₀, PE 12₀₀₂, PE 12₂₀₀, and PE 12₂₀₂. The PE 12₁₀₁ may be configured to perform data input and data output with the PE 12₅₀₅ in a different dimension as a data movement in diagonal direction.

The arrangement of PEs 12 shown in FIG. 1 is an example. In this example, the PEs 12 are arranged so that the total length of the wirings for inputting and outputting data between the PEs 12 is the shortest. For example, although the total length of the wiring becomes longer, the PEs 12 may be arranged in parallel in the X direction and the Y direction as shown in FIG. 11.

As described above, each PE 12 included in the accelerator 10 of the present embodiment is capable of performing data input and data output with other PEs 12 that are not adjacent to the ego PE 12 in the X and Y directions. As described above, in the conventional accelerator 100, input and output of data is not allowed between PEs 12 that are not adjacent in the X or Y direction. However, in the present embodiment, by using a new concept of the Z and W directions (3rd and 4th dimensions) different from the X and Y directions (1st and 2nd dimensions), it is possible to perform data input and data output with other PEs 12 that are not adjacent to the ego PE 12 in the X and Y directions. Therefore, in the accelerator 10 of the present embodiment, data can be moved between the PEs 12 with a higher speed compared with the conventional configuration.

In FIG. 1, when data is moved from PE 12₀₀₇ to PE 12₀₀₀, the data is moved four times, from PE 12₀₀₇, in order, PE 12₀₀₆, PE 12₀₀₅, PE 12₀₀₄, and finally to PE 12₀₀₀. In the conventional configuration, as explained with reference to FIG. 11, data movement from PE 12₀₀₇ to PE 12₀₀₀ requires seven times of data movement. As described above, the accelerator 10 of the present embodiment can move data with a higher speed than the conventional accelerator. When moving data from PE 12₄₀₇ to PE 12₄₀₀, seven times of data movement are required in the conventional method, while the present embodiment requires only four times of data movement.

In the accelerator 10 of the present embodiment, the number of elements is defined as 4D (X, Y, Z, W) = (4, 4, 2, 2). When the number of directions in which data can be moved simultaneously is four, the Sum processing can be performed with eight times of data movement. In the conventional accelerator 100 shown in FIG. 11, the Sum processing under the same conditions requires 16 times of data movement.

In the accelerator 10 of the present embodiment, when data can be moved diagonally and simultaneously in four directions, the Sum processing can be performed with six times of data movement. In this example, data movement in diagonal direction and data movement to adjacent PEs 12 in the longitudinal and lateral directions are alternately performed. In the conventional accelerator 100 shown in FIG. 11, nine times of data movement are required for Sum processing under the same conditions.

When the data movement in diagonal direction and data movement to adjacent PEs 12 in the longitudinal and lateral directions can be performed simultaneously, the accelerator 10 of the present embodiment can perform Sum processing with four times of data movement. In the conventional accelerator 100 shown in FIG. 11, the Sum processing under the same condition requires eight times of data movement.

### (Second Embodiment)

In the first embodiment, the number of elements is set to 4D (X, Y, Z, W) = (4, 4, 2, 2). In the present embodiment, the number of elements is set to 4D (X, Y, Z, W) = (4, 4, 4, 4).

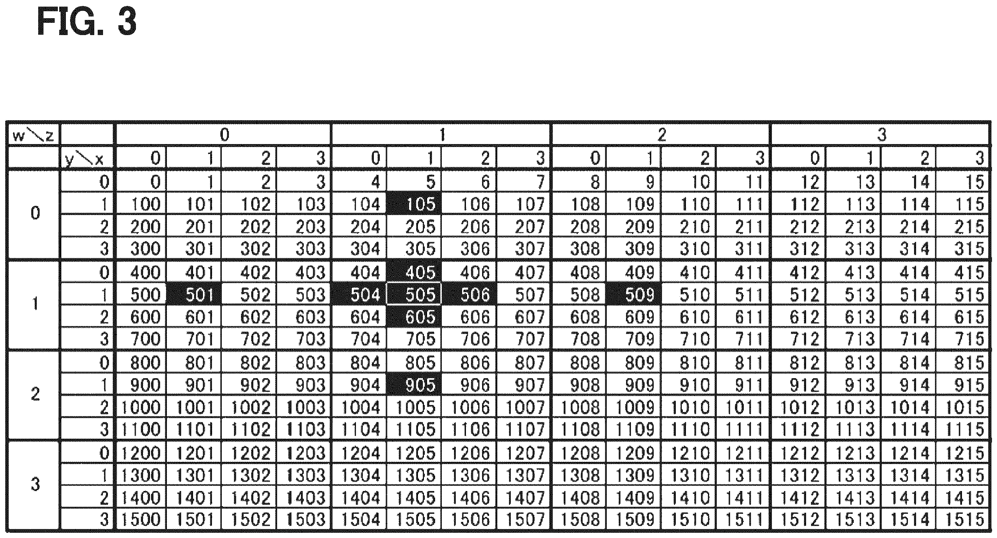

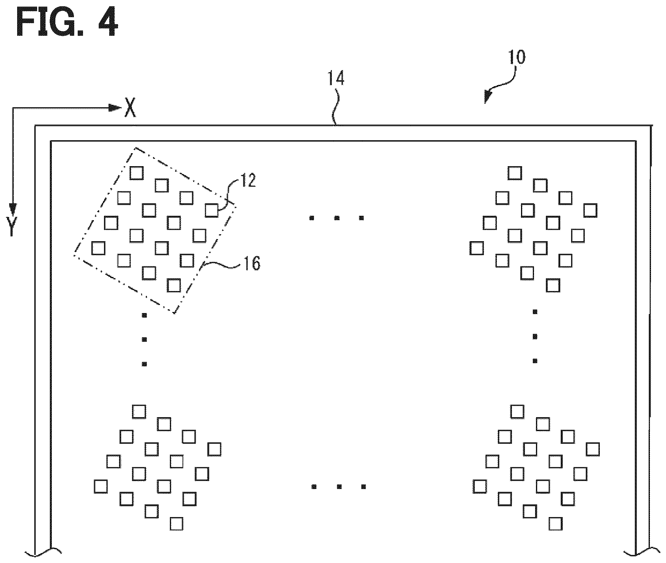

FIG. 3 is a schematic diagram showing coordinates of PEs 12 included in the accelerator 10 of the present embodiment. When the number of elements is 4D (X, Y, Z, W) = (4, 4, 4, 4), the accelerator 10 includes 256 PEs 12 in total. Each group 16 includes 16 PEs 12. FIG. 4 is a schematic diagram showing an example in which the PEs 12 of the present embodiment are arranged so as to minimize the overall length of the wiring. In FIG. 4, the number of PEs 12 is 16 in each group 16.

In the coordinate system of FIG. 3, coordinates of PEs with which the PE 12₅₀₅ can perform data input and data output are indicated in black. When there is no data movement in diagonal direction, the connection destinations of PE 12₅₀₅, which has coordinates (x, y, z, w) = (1, 1, 1, 1), include the adjacent PEs 12 in each dimension, that is, PEs having coordinates of (0, 1, 1, 1), (2, 1, 1, 1), (1, 0, 1, 1), (1, 2, 1, 1), (1, 1, 0, 1), (1, 1, 2, 1), (1, 1, 1, 0), and (1, 1, 1, 2). The connection destinations refer the PEs 12 with which data input and data output can be performed.

In a case where the data can be moved diagonally in the X direction (first dimension) and Y direction (second dimension), the connection destinations of PE 12₅₀₅ include the PEs having coordinates of (0,0,1,1), (2,0,1,1), (0,2,1,1), and (2,2,1,1).

In a case where the data can be moved diagonally in the Z direction (third dimensions) and W direction (fourth dimensions), the PE 12s connected to PE 12₅₀₅ also include (1,1,0,0), (1,1,2,0), (1,1,0,2), and (1,1,2,2).

### (Third Embodiment)

In the present embodiment, an example of the number of elements is 6D (X, Y, Z, W, U, V) = (4, 4, 2, 2, 2, 2) will be described. In the present embodiment, 6D includes the concepts of U and V directions in addition to X, Y, Z, and W directions, and represents the coordinates of PEs 12 in six dimensions. In this way, when the number of PEs 12 included in the accelerator 10 is increased, or when it is desired to increase the speed of data movement between PEs 12, the number of elements in each dimension is increased or the dimensions are increased, as in the second and third embodiments. For example, the dimensions may be increased to 8D, 10D, and the like.

When increasing the dimensions, if the number of elements in the odd-numbered dimensions is significantly different from the number of elements in the even-numbered dimensions, the data may be divided into only to the dimension with the larger number of elements. For example, when increasing the dimension from 4D, the dimension is increased to 6D, 8D, and so on. In this case, the number of elements in odd-numbered dimensions may be small, and the number of elements in 5D or 7D may be 1. In such a case, a dimension with one element may not be set, and instead, for example, 6D may be set to 5D, and 8D may be set to 6D.

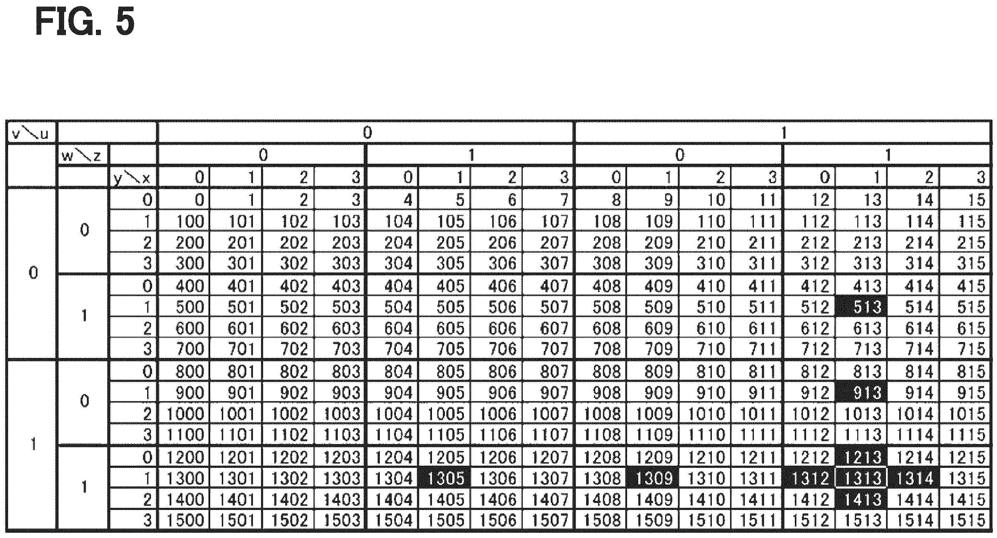

FIG. 5 is a schematic diagram showing the coordinates of PEs 12 included in the accelerator 10 of the present embodiment. When the number of elements is 6D (X, Y, Z, W, U, V) = (4, 4, 2, 2, 2, 2), the accelerator 10 includes 256 PEs 12 in total. Each group 16 includes 16 PEs 12.

In the coordinate system of FIG. 5, coordinates of PEs with which the PE 12₁₃₁₃ can perform data input and data output are indicated in black. When there is no data movement in diagonal direction, the connection destination of PE 12₁₃₁₃, which has coordinates (X, Y, Z, W, U, V) = (1, 1, 1, 1, 1, 1), include the adjacent PEs 12 in each dimension, that is, PEs 12 having coordinates of the PE 12 to which data is input/output, is the PE 12 of the adjacent element in each dimension, so it is (0, 1, 1, 1, 1, 1), (2, 1, 1, 1, 1, 1), (1, 0, 1, 1, 1, 1), (1, 2, 1, 1, 1, 1), (1, 1, 0, 1, 1, 1), (1, 1, 1, 0, 1, 1), (1, 1, 1, 1, 0, 1), and (1, 1, 1, 1, 1, 0).

In a case where the data can be moved diagonally in the X direction (first dimension) and Y direction (second dimension), the connection destinations of PE 12₁₃₁₃ include the PES having coordinates of (0, 0, 1, 1, 1, 1), (2, 0, 1, 1, 1, 1), (0, 2, 1, 1, 1, 1), and (2, 2, 1, 1, 1, 1).

In a case where the data can be moved diagonally in the Z direction (third dimension) and W direction (fourth dimensions), the connection destinations of PE 12₁₃₁₃ also include PE 12 having coordinates of (1, 1, 0, 0, 1, 1).

In a case where the data can be moved diagonally in the U direction (fifth dimension) and V direction (sixth dimensions), the connection destinations of PE 12₁₃₁₃ also include PE having coordinates of (1, 1, 1, 1, 0, 0).

### (Fourth Embodiment)

In the present embodiment, overlapping data is used in calculation performed by the neural network. The overlapping data includes the data to be processed in the current calculation (hereinafter referred to as "processing data" in the present embodiment) and adjacent data to be used in the next calculation.

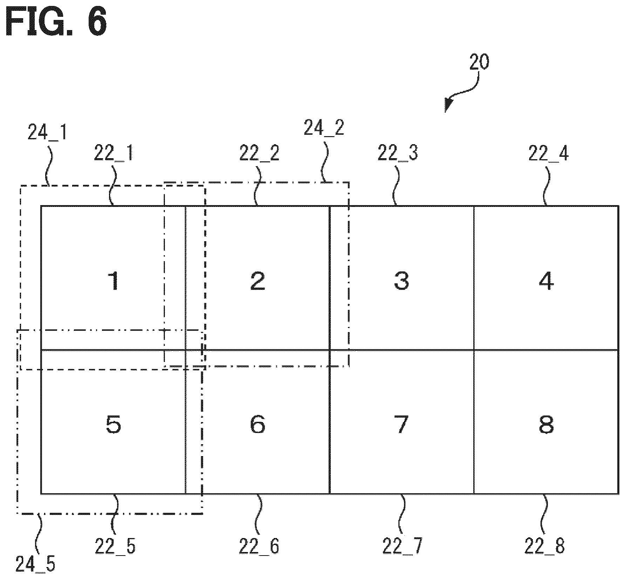

FIG. 6 is a schematic diagram showing a data area 20, which is calculation target of the accelerator 10 according to the present embodiment. The data area 20 is divided into processing data areas 22_1 to 22_8 numbered 1 to 8, and the accelerator 10 performs calculation on each of the processing data areas 22_1 to 22_8. The order of calculation, that is, the order in which the data are read into the accelerator 10, may be set to a numeric order from 1 to 8 as assigned to the processing data areas 22.

Then, for each processing data area 22, a calculation is performed using a portion of data (overlapping data) included in the adjacent processing data area 22 as indicated by dashed lines or chain lines in FIG. 6. For example, for the processing data area 22_1, data included in the adjacent processing data areas 22_2, 22_5, and 22_6 surrounded by the dashed line corresponds to the overlapping data. For the processing data area 22_2, data included in the adjacent processing data areas 22_1, 22_3, 22_5, 22_6, and 22_7 surrounded by the dashed-dot line corresponds to the overlapping data. For the processing data area 22_5, data included in the adjacent processing data areas 22_1, 22_2, and 22_6 surrounded by the two-dot chain line corresponds to the overlapping data.

The accelerator 10 reads data from the external memory 14 for each of the readout data areas 24_1, 24_2, 24_5 indicated by the dashed line, the one-dot chain line, and the two-dot chain line, and then performs calculation using the neural network with consideration of the overlapping data. In FIG. 6, indication the readout data areas 24_3, 24_4, and 24_6 to 24_8 corresponding to the processing data areas 22_3, 22_4, and 22_6 to 22_8 is omitted for simplification purpose.

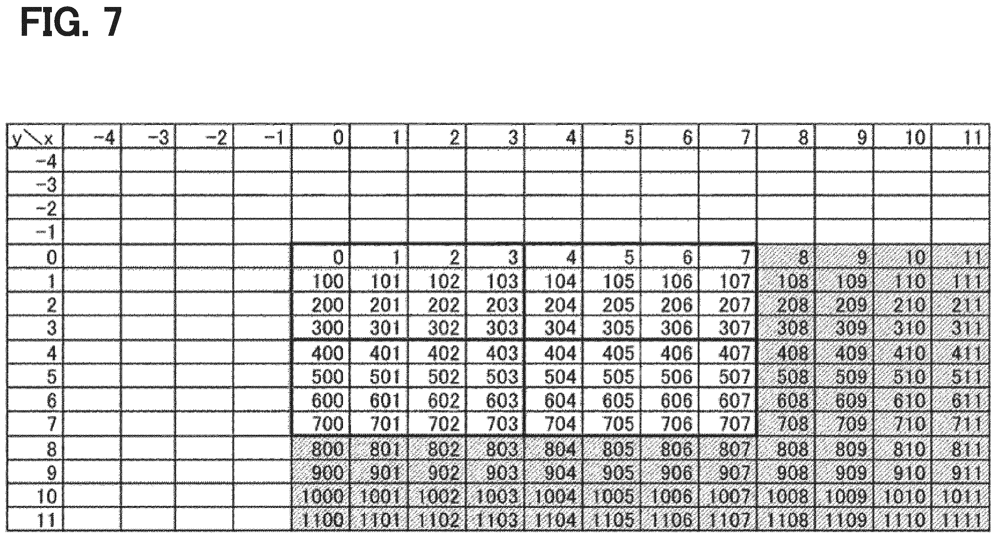

FIG. 7 is a diagram showing coordinates of data included in the processing data area 22_1 allocated to the PE 12 according to the conventional configuration. In the conventional configuration, the PEs 12 are arranged in two-dimensional (2D) manner as shown in FIG. 11 and FIG. 12.

In FIG. 7, the data areas with hatched coordinates indicate the overlapping data, the data with hatched coordinates is included in other processing data areas 22 adjacent to the processing data area 22_1. The data without hatching is the processing data, that is, the calculation target to be calculated by the neural network. In FIG. 7, coordinates with no numerical value indicate that there is no data to be calculated. For convenience, a minus sign is added to each of these coordinates. The overlapping data is read from the external memory 14 into a dedicated PE 12 (Border Core, hereinafter also referred to as "BC"). That is, the hatched coordinates indicate BC.

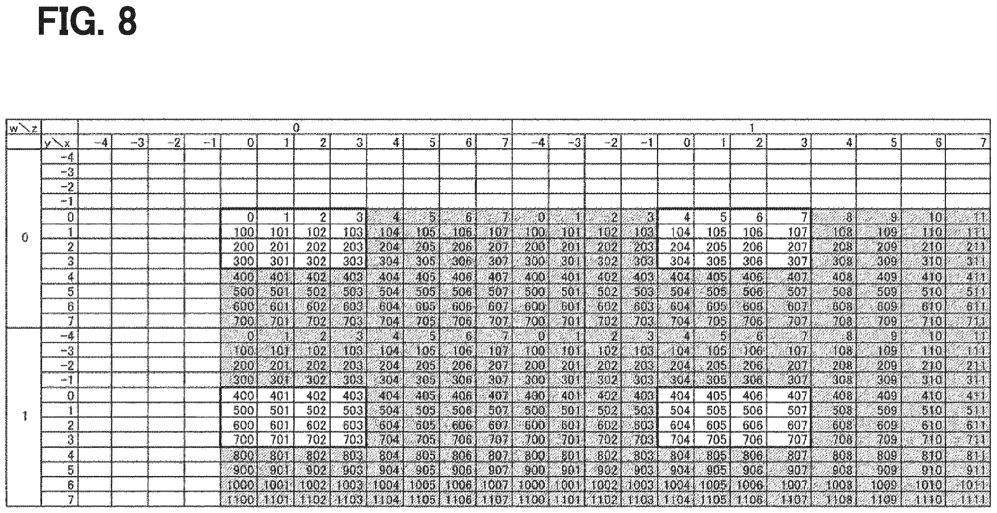

FIG. 8 is a diagram showing coordinates of data included in the processing data area 22_1 allocated to the PE 12 according to the present embodiment. The numerical values indicating coordinates in FIG. 7 correspond to the numeric values indicating coordinates in FIG. 7. In the example of FIG. 8, the number of elements is set to 4D (X, Y, Z, W) = (4, 4, 2, 2), and data movement between PEs 12 is performed in the same manner as in the above embodiment. In the present embodiment, the processing data area 22_1 to be calculated is divided into four areas in order to represent the area in 4D. For this reason, since overlapping data corresponding to each divided area of the processing data area 22_1 is required, more BCs are required than in the case where the PEs 12 are arranged in 2D.

The PE 12 is capable of inputting and outputting the overlapping data together with the processing data between the adjacent PEs 12 in the X and Y directions, and is also capable of inputting and outputting overlapping data together with processing data between the adjacent PEs 12 in other dimensions (Z and W directions). As a result, the accelerator 10 of the present embodiment can move data between the PEs 12 faster even when overlapping data is used in calculation performed by the neural network. The overlapping data area is mainly overlapped in the X and Y directions. Thus, when there is little need to enable input and output of overlapping data in the Z and W directions, input and output of overlapping data in the Z and W direction may be set to be disabled.

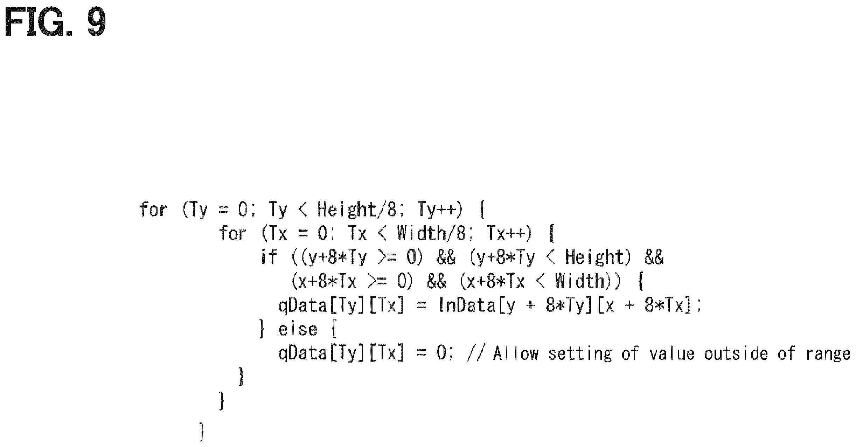

FIG. 9 shows an example of calculation formula indicating data reading for each PE 12. The values of Tx and Ty included in the calculation formula shown in FIG. 9 are set to be Tx = 0, Ty = 0 for the readout data area 24_1 shown by the dashed line in FIG. 6, set to be Tx = 1, Ty = 0 for the readout data area 24_2 shown by the dashed-dot line in FIG. 6, and set to be Tx = 0, Ty = 1 for the readout data area 24_5 shown by the two-dot chain line in FIG. 6.

### (Modification of Fourth Embodiment)

In a modification of the fourth embodiment, the accelerator 10 does not include a BC that reads overlapping data, and each PE 12 may be configured to read and hold the necessary overlapping data together with the processing data. As a result, the BC is not necessary for the accelerator 10. In this case, the processing data and overlapping data are transferred from the external memory 14 to all of the PEs 12 by, for example, burst transfer using broadcast, and each of the PEs 12 acquires the data transferred from the external memory at own processing timing.

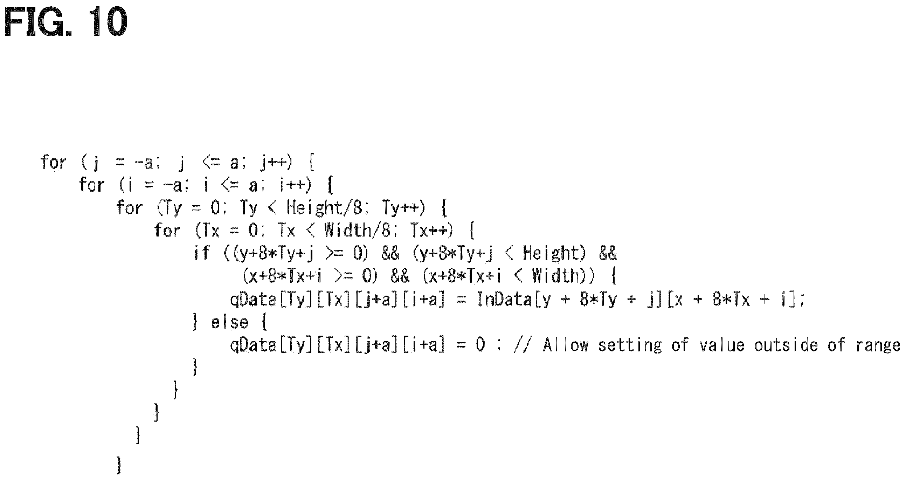

FIG. 10 shows an example of calculation formula indicating data reading by each PE 12. In FIG. 10, the parameter "a" indicates the width on one side of the overlapping data and is set to a value of 1 or more.

### (Fifth Embodiment)

The following will describe processing performed by the external memory 14 and the calculation processing performed by the PEs 12, which can be executed in conjunction with the above-described embodiments.

### (Configuration of External Memory)

The dimensions of the external memory 14 may be increased to allow simultaneous transfer of data with different dimensions. Similar to the accelerator 10, the external memory 14 may be configured to store data in a coordinate system that includes two dimensions of X and Y directions as well as two or more other dimensions indicating other directions, and enable input and output of data with the PE 12 having the same coordinates.

The accelerator 10 may include multiple external memories 14. The multiple external memories 14 store data in a coordinate system including three or more dimensions, and data can be input and output to and from the PEs 12 having the same coordinates. For example, one external memory 14 accesses a PE 12 corresponding to the first element of the third or the fourth dimension to perform data input or output with the PE. Another external memory 14 accesses a PE 12 corresponding to an element other than the first element of the third or the fourth dimension to perform data input or data output. This configuration allows data input and data output to be simultaneously performed between (i) multiple external memories 14 and (ii) multiple PEs 12, so that the accelerator 10 can perform data input and data output efficiently between the external memories 14 and the PEs 12.

In the above configuration, when the numbers (coordinates) of elements from the third dimension onwards are different between the external memory 14 and the PE 12 and the PE 12 has more elements than the external memory, other data may be transferred to the PE 12. When the coordinates of data to be transferred do not differ between the external memory 14 and the PE 12, the data transfer can be switched so that external data with the same coordinates are transferred to all of the PEs 12.

### (Execute different processing by specifying an area of PE 12)

The PE 12 is capable of performing multiple different processing. Therefore, areas of PEs 12 may be specified in advance to execute the same or different processing. When multiple external memories 14 are provided, areas of the multiple external memories 14 to be used may be specified in advance. The timing or processing time may differ depending on the processing. Thus, the timings at which the PEs 12 are required to execute the processing may be set to be different from one another. That is, the PEs 12 are capable of performing different processes or processes at different timings for each high dimension, such as the third dimensions or the fourth dimension. This configuration allows the accelerator 10 to effectively perform the processing.

When all PEs 12 are operated with the same program and the amount of processing data is large, the calculations speed can be increased by increasing the number of PEs 12 or the number of dimensions. When the amount of data is small, increasing the number of dimensions may result in some PEs 12 not performing calculations. Therefore, when multiple pieces of data need to be processed but the amount of data is small, the areas of PEs 12 may be specified to enable execution of different programs, thereby operating the PEs 12 with improved efficiency.

For example, in an accelerator 10 that processes data with the number of elements 4D (X, Y, Z, W) = (8, 8, 2, 2), the fourth dimension (W) is divided into two accelerators 10 each of which process data in (8, 8, 2, 1), and different programs can be run on the PEs 12 in the divided areas.

Similarly, in an accelerator 10 that processes data with the number of elements 4D (X, Y, Z, W) = (8, 8, 2, 2), when there are two pieces of data with a vertical width of only 4 and it is desired to process each piece with a different program, the second dimension (Y) is divided as (8, 4, 2, 2) and the PEs 12 in the divided areas run each program simultaneously. In this case, although there are eight PEs 12 in the second dimension, the program is constructed so that the fifth to eighth PEs 12 and thereafter virtually perform calculations as the first to fourth PEs 12.

Multiple external memories 14 may be provided so that different programs executed by the PEs 12 can transfer data simultaneously. In this case, the range of data transfer between the external memories 14 and the PEs 12 or from a specific PE 12 to another PE 12 may be set within a range determined by each program. In this case, data necessary for the read and write operations may be transferred to different external memories 14 so that the read and write operations can be performed simultaneously.

When the execution of different programs is allowed in PEs 12, processing may be made possible in a pipeline manner, with a certain group of PEs dedicated to input data from the external memory 14, another group of PEs receiving read data and performing calculations, and another group of PEs receiving the processed data and outputting the data to the external memory 14.

Although the present disclosure is described with the embodiments and modifications as described above, the technical scope of the present disclosure is not limited to the scope described in the above embodiments and modifications. Various changes or improvements can be made to the above embodiments and modifications without departing from the scope of the present disclosure, and other modifications or improvements are also included in the technical scope of the present disclosure.

## Claims

1. A calculation device (10) comprising a plurality of processors (12), wherein
the plurality of processors are represented by a coordinate system, which includes two dimensions indicating X direction and Y direction and two or more different dimensions indicating different directions,
each of the plurality of processors is configured to perform data input or data output with the processor adjacent in the X direction or the Y direction, and
each of the plurality of processors is configured to perform data input or data output with the processor adjacent in the different dimension.

2. The calculation device according to claim 1, wherein
four or more of the plurality of processors, each of which has the different dimension with one another, are virtually grouped as a group (16), and
each processor included in the group is configured to perform data input or data output with (i) at least two processors included in the same group and (ii) two of the plurality of processors, which are included in a different group and arranged adjacent in the X direction and Y direction.

3. The calculation device according to claim 1 or 2, wherein
each of the plurality of processors is configured to perform data input or data output with one of the plurality of processors arranged in a diagonal direction with respect to at least one of the X direction, the Y direction, or the different direction.

4. The calculation device according to claim 3, further comprising
a plurality of external memories (14) storing data to be calculated by the plurality of processors and transferring the data to the plurality of processors,
wherein
the plurality of external memories store the data using a coordinate system, which includes two dimensions indicating X direction and Y direction and two or more different dimensions indicating different directions, and
each of the plurality of external memories is configured to perform data input or data output with one of the plurality of processors having the same coordinate.

5. The calculation device according to claim 1 or 2, wherein
the plurality of processors are arranged such that a total length of wiring for performing data input or data output among the plurality of processors has a minimum length.

6. The calculation device according to claim 1 or 2, wherein
each of the plurality of processors receives, from an external memory, processing data, which is to be calculated in a current calculation, together with overlapping data, which is adjacent to the processing data and is to be calculated in a next calculation,
each of the plurality of processors is configured to perform input or output of the processing data and the overlapping data with the processor adjacent in the X direction or the Y direction, and
each of the plurality of processors is configured to perform input or output of the processing data and the overlapping data with the processor adjacent in the different dimension.

7. The calculation device according to claim 1 or 2, wherein
the plurality of processors are capable of performing different processes for the two or more different dimensions, respectively, or
the plurality of processors are capable of performing a process at different timings.

8. A method for moving data among a plurality of processors included in a calculation device, the method comprising:
representing the plurality of processors using a coordinate system, which includes two dimensions indicating X direction and Y direction and two or more different dimensions indicating different directions;
performing, by each of the plurality of processors, data input or data output with the processor adjacent in the X direction or the Y direction;
performing, by each of the plurality of processors, data input or data output with the processor adjacent in the different dimension; and
calculating, by each of the plurality of processors, input data and outputting a calculation result.
